# EUROPÄISCHE PATENTANMELDUNG

(11) **EP 2 394 829 A1**
(43) Veröffentlichungstag der Anmeldung: **14.12.2011**
(21) Anmeldenummer: 11166899.2
(22) Anmeldetag: 20.05.2011
(51) Int. Cl.: B60H 1/00

(54) **Fahrzeug-Klimatisierungsvorrichtung**

(30) Priorität: 08.06.2010 DE 102010029771
(71) Anmelder: Behr GmbH & Co. KG, 70469 Stuttgart (DE)
(72) Erfinder: Wolf, Walter, 71570, Oppenweiler-Zell (DE)
(74) Vertreter: Grauel, Andreas

(57) **Zusammenfassung**

Fahrzeug-Klimatisierungsvorrichtung mit einer fahrzeuginnenraumseitig vor Fahrzeuginnenraum (F) von Fahrzeugmotorraum (M) trennenden Stirnwand (5, 5') angeordneten Gebläse (8, 8', 8", 21, 29) zur Förderung von durch eine Frischluft-Einleitungsöffnung (14, 14', 26, 34) und durch eine Umluft-Einleitungsöffnung (15, 15', 26, 35) über eine vorgeschaltete Frischluft-Umluft-Umschaltvorrichtung (1, 1', 1", 19, 27) eintretenden Luftstrom, wobei sich die Umschaltvorrichtung (1, 1', 1", 19, 27) vom Fahrzeuginnenraum (F) durch eine Öffnung (4, 4') in der Stirnwand (5, 5') bis in den Motorraum (M) erstreckt.

## Beschreibung

Die Erfindung betrifft eine Fahrzeug-Klimatisierungsvorrichtung nach dem Oberbegriff des Patentanspruchs 1.

Aus der DE 102008012349 A1 ist eine Heiz- bzw. Klimaanlage mit einer Kragen-Lufteinlassvorrichtung bekannt. Die Kragen-Lufteinassvorrichtung besteht aus einem Gehäuse mit einer Frischlufteinlassöffnung und einer Luftauslassoffnuung sowie einer einstellbaren Umluftklappe zur bedarfsgerechten Umschaltung von Frischluft auf Umluft. Die Umluftklappe ist auf der Außenwand der Frischlufteinlassäffnung des Gehäuses angeordnet.

Die DE 102009009912 A1 betrifft eine Innen-/Außenluftumschaltvorrichtung in einem Fahrzeugklimatisierungssystem, das zwischen einem Luftdurchgang, der Luft von außerhalb des Fahrzeuginneren einleitet, und einem Luftdurchgang, der Luft von dem Inneren des Fahrzeuginneren einleitet, umschaltet.

Der Erfindung liegt die Aufgabe zugrunde, eine Fahrzeug-Klimatisierungsvorrichtung mit im Gegensatz zum Stand der Technik verbesserten akustischen Eigenschaften, verbesserter Zugänglichkeit und verbesserter Energieeffizienz zu schaffen.

Diese Aufgabe wird gelöst durch eine Fahrzeug-Klimatisierungsvorrichtung mit den Merkmalen des Anspruchs 1. Vorteilhafte Ausgestaltungen sind Gegenstand der Unteransprüche.

Gelöst wird die Aufgabe erfindungsgemäß dadurch, dass sich die Umschaltvorrichtung vom Fahrzeuginnenraum durch eine Öffnung in der Stirnwand bis in den Motorraum erstreckt. Dadurch ergibt sich in vorteilhafterweise eine verbesserte Zugänglichkeit im Wartungsfall oder Austauschfall der Frischluft-Umluft-Umschaltvorrichtung bei gleichzeitig besserer Nutzung des zur Verfügung stehenden Bauraumes. Die Anordnung der Frischluft-Umluft-Umschaltvorrichtung ermöglicht eine, insbesondere im Hinblick auf die Anordnung der Frischluft-Einleitungsöffnung sowie der Umluft-Einleitungsöffnung, vorteilhafte Ausrichtung an der Stirnwand.

Vorzugsweise kann eine nahezu gleiche Ansaug- und Einströmrichtung der Frischluft in die Frischluft-Einleitungsöffnung als auch der Umluft in die Umluft-Einleitungsöffnung realisiert werden. Dies bietet besonders hinsichtlich der akustischen Eigenschaften der Fahrzeug-Klimatisierungsvorrichtung erhebliche Vorteile. Beispielsweise kann die für die Frischluft- bzw. Umluft-Einströmung vorgesehene Fläche in einer Größenordnung von ca. 0,8 bis 2,0 dm² liegen,

Eine Ausführungsform sieht vor, dass eine Ansaug-Einströmrichtung von etwa 30° bis 240°, bevorzugt etwa 50° bis 180°, relativ zur Ausström-Abströmrichtung des Luftstroms vorgesehen sein kann. Diese Ansaug-Einströmrichtungen haben sich im Rahmen der vorliegenden Erfindung als besonders vorteilhaft erwiesen, da diese Werte im Bereich des kleinsten spezifischen Pegels liegen,

Beispielsweise kann sich bei verschiedenen Arbeitspunkten im Verhältnis zur Ansaug-Einströmrichtung ein differenter Schalldruckpegel ergeben. Beispielsweise kann die Schalldruckpegeldifferenz bis zu 3 dB(A) zwischen günstiger und ungünstiger Ansaugrichtung liegen.

Vorgesehen ist ferner eine Abdichtung der sich durch die Öffnung der Stirnwand erstreckenden Frischluft-Umschaltvorrichtung gegenüber der Stirnwand zwischen der Frischluft-Einleitungsöffnung und der Umluft-Einleitungsöffnung, mit der die Anordnung abdichtbar auf der Stirnwand des Fahrzeugs montierbar ist. Die Dichtung kann beispielsweise eine PU-Dichtung sein und dient zur Vermeidung des Wassereintritts durch diese Öffnung.

Eine weitere Ausführungsform sieht vor, dass eine an einem Flansch oder dergleichen befestigte Frischluft-Umluftschaltvorrichtung vorgesehen ist, wobei eine Dichtung zwischen dem Befestigungsflansch und der Stirnwand angeordnet sein kann. Diese Dichtung kann beispielsweise ebenfalls eine PU-Dichtung sein.

Eine bevorzugte Ausführungsform sieht eine sowohl in Sperr-/Öffnungsstellung zur Frischluft-Einleitungsöffnung als auch in Sperr-/Öffnungsstellung zur Umluft-Einleitungsöffnung bringbare, insbesondere einschenklig und schwenkbar ausgebildete, Klappe vor. Denkbar ist ferner, die Klappe als zweischenklige gekröpfte Klappe auszubilden. Beispielsweise kann die Klappe als zylinder-, kegel-, kreisring- oder halbkugelförmige Segmentklappe ausgebildet sein. Es können unabhängige Steuerungen der einzelnen Klappen vorgesehen sein, wodurch sich verschiedene Frischluft-Umluft-Anteile ergeben. Beispielsweise kann die gewünschte Luftmenge über die Drehzahl des Motors gesteuert werden. Beispielsweis kann eine Klappe, z.B. die Umluftklappe zu 100% geöffnet sein, während die Frischluftklappe abgedrosselt ist, um ein bestimmtes Mischungsverhältnis zu erhaben.

Durch die vorgeschlagene Anordnung der Klimatisierungsvorrichtung sowie der vorgeschlagenen Klappengeometrie und Lage der Klappen kann die Frisch- und Umluft nahezu aus derselben Richtung zum Gebläse strömen, wodurch erhebliche akustische Vorteile resultieren,

Eine weitere bevorzugte Ausführungsform sieht vor, dass je Einleitungsöffnung eine unabhängige, in Sperr-Öffnungsstellung bringbare Klappe, vorgesehen sein kann. Beispielsweise können die Klappen auf einer gemeinsamen Schwenkachse angeordnet sein bzw, eine gemeinsame Schwenkachse definieren, Es kann jedoch auch vorgesehen sein, dass jede Klappe eine separate Schwenkachse definiert

Beispielsweise kann vorgesehen sein, dass sich die Frischluft-Umschaltvorrichtung bis in einen freien Bauraum einer vor der Stirnwand angeordneten Wasserabscheidung erstrecken kann. Beispielsweise kann im Bereich der Wasserabscheidung bzw, im Bereich der Klappen zumindest ein Vorfilter angeordnet sein, wobei der Vorfilter beispielsweise eine gerade oder halbkreisgebogene Ausgestaltung aufweist. Der Vorfilter kann zum Schutz gegen Wasser, Schmutz oder dergleichen vorgesehen sein. Beispielsweise kann vorgesehen sein, dass ein Filter vor der Frischluftklappe und ein weiterer hinter der Umluftklappe zwischen Umluftklappe und Gebläse angeordnet ist. Beispielsweise können die einzelnen Filter aufeinander abgestimmte Zwecke erfüllen, wobei der Frischluftfilter gegen Wasser oder dergleichen und der Umluftfilter beispielsweise gegen Hundehaare oder dergleichen wirken kann. Der Service zum Austausch/Reinigung der Filter kann beispielswese über den Motorraum erfolgen.

Eine weitere Ausführungsform sieht eine Anordnung der Frischluft-Einleitungsöffnung oberhalb der Umluft-Einleitungsöffnung vor. Beispielsweise können jeder Einleitungsöffnung separate Klappengeometrien zugeordnet sein, wobei sich beide Klappengeometrien auf einer Stirnwandseite erstrecken.

Weitere Vorteile, Merkmale und Einzelheiten der Erfindung ergeben sich aus der nachfolgenden Beschreibung, in der unter Bezugnahme auf die Zeichnung mehrere Ausführungsbeispiele der Erfindung beschrieben sind, Dabei können die in den Ansprüchen und in der Beschreibung erwähnten Merkmale jeweils einzeln für sich oder in beliebiger Kombination erfindungswesentlich sein. Gleiche Bezugszeichen bedeuten gleiche Bauteile.

Es zeigen:
**Fig. 1** Komponenten einer schematisch dargestellten Frischluft-Umluft-Umschaltvorrichtung erster Ausführungsform;
**Fig. 2** Komponenten einer schematich dargestellten Frischluft-Umluft-Umschaltvorrichtung zweiter Ausführungsform;
**Fig. 3** Komponenten einer schematisch dargestellten Frischluft-Umluft-Umschaltvorrichtung dritter Ausführungsform;
**Fig. 4** Komponenten einer schematisch dargestellten Frischluft-Umluft-Umschaltvorrichtung vierter Ausführungsform:
**Fig. 5** Komponenten einer schematisch dargestellten Frischluft-Umluft-Umschaltvorrichtung fünfter Ausführungsform;
**Fig. 6** schematisch dargestellter Ansaug-Einströmungsbereich mit linksläufigem Gebläse; und
**Fig. 7** schematisch dargestellter Ansaug-Einströmungsbereich mit rechtsläufigem Gebläse,

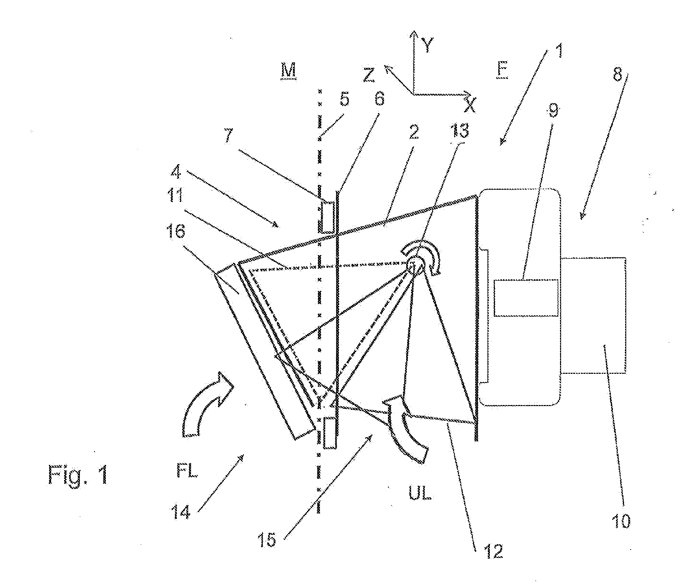

Fig. 1 zeigt schematisch dargestellte Komponenten einer zu einer Fahrzeug-Klimatisierungsvorrichtung gehörenden Frischluft-Umluft-Umschaltvorrichtung 1. Die Frischluft-Umluft-Umschaltvorrichtung 1 umfasst eine Gehäusestruktur 2, wobei sich die Gehäusestruktur 2 vom Fahrzeuginnenraum F durch eine Öffnung 4 in der Stirnward 5 bis in den Motorraum M erstreckt.

Die Frischluft-Umluft-Umschaltvorrichtung 1 weist einen Dichtflansch 6 auf, der sich bis vor die Stirnwand 5 erstreckt, wobei zwischen Stirnwand 5 und Dichtflartsch 6 eine Dichtung 7 angeordnet ist. Ferner schließt sich ein Gebläse 8, mit einem schematisch dargestellten Druckstutzen 9 und einem Motor 10, an die Gehäusestruktur 2 an. Innerhalb der Gehäusestruktur 2 ist eine schematisch dargestellte Klappe 1 in zwei Stellungen 11, 12 angeordnet bzw. in diesen gezeichnet, wobei die Klappe in die Stellungen 11, 12 schwenkbar ist und dabei um eine Schwenkachse 13 im Inneren der Gehäusestruktur 2 gelagert angeordnet ist

Die Klappe ist in der Stellung 11 dabei der Frischluft-Einleitungsöffrung 14 und die Klappe ist in der Stellung 12 der Umluft-Einleitungsöffnung 15 zugeordnet. Der Frischluft- und Umluftstrom wird ebenfalls schematisch durch die Pfeilsymbole FL und UL dargestellt Vor der Frischluft-Einleitungsöffnung 14 bzw. der dazugehörigen Klappe 11 ist ein in der Art eines Vorfilters ausgebildetes Filterelement 16 gegen Schnee, Wasser, Schmutz oder dergleichen vorgesehen. Das Filterelement 16 ist im Motorraum M angeordnet und kann zu Servicezwecken über den Motorraum M bedient werden. In Figur 1 kann auch erkannt werden, dass die Klappe 1 auch in einer Zwischenposition angeordnet sein kann.

Durch die Anordnung der Klappe 1, die in die Stellungen 11, 12 einstellbar ist, ergibt sich eine nahezu gleiche Ansaug- und Einströmrichtung der Frischluft FL in die Frischluft-Einleitungsöffnung 14 als auch der Umluft UL in die Umluft-Einleitungsöffnung 15.

Durch die teilweise Erstreckung der Frischluft-Umluft-Umschaltvorrichtung 1 in den Motorraum M, erstreckt sich die Frischluft-Umluft-Umschaltvorrichtung 1 weniger in X-Richtung in den Fahrzeuginnenraum F, wodurch dort mehr Bauraum zur Verfügung steht.

Es ist vorgesehen, dass die Klappengeometrie der Klappe 1zumindest bereichsweise durch die Öffnung 4 in der Stirnwand 5 schwenkt, wodurch weiterer Bauraum eingespart und die Frischluft-Umluft-Umschaltvorrichtung 1 als kompaktes, leichtes und gut zugängliches Bauteil ausgebildet werden kann.

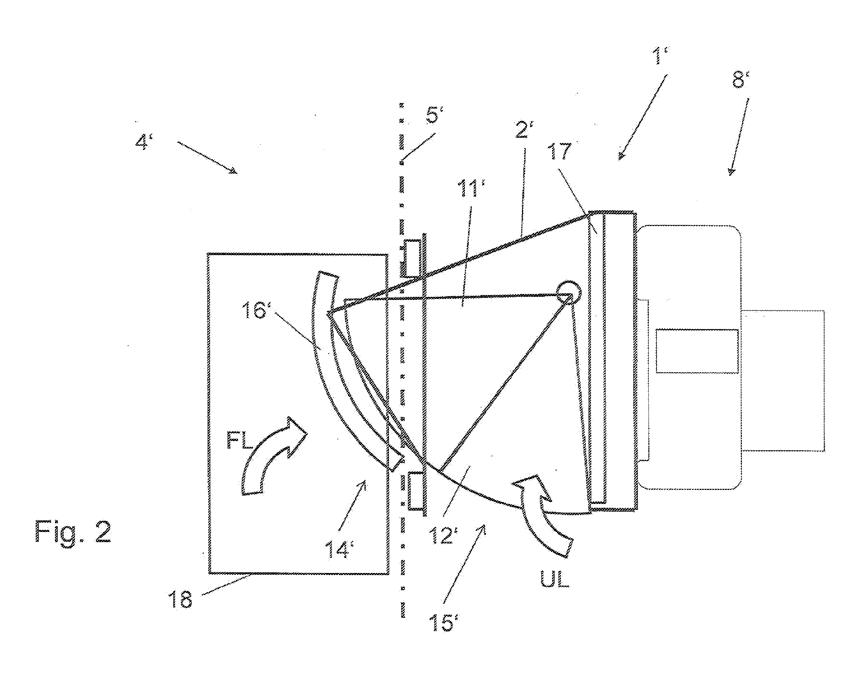

Fig. 2 zeigt eine Frischluft-Umluft-Umschaltvorrichtung 1' mit einer veränderten Klappengeometrie, Die Klappe1' mit ihren Stellungen 11' und 12' ist um eine Schwenkachse 13' schwenkbar im Inneren der Gehäusestruktur 2' gelagert.

Die Klappe 1' ist als bogenförmige Segmentklappe ausgebildet und schwenkt zumindest bereichsweise durch die Öffnung 4' in der Stirnwand 5', Vor der Stellung 11' die der Frischluft-Einleitungsoffnung 14' zugeordnet ist, erstreckt sich ein bogenförmiges Filterelement 16' (als Vorfilter ausgebildet). Ein zweites Filterelement 17 ist innerhalb der Gehäusestruktur 2' vor dem Gebläse 8' angeordnet.

Ferner ist der Frischluft-Umluft-Umschaltvorrichtung 1' ein Wasserabscheidebehälter 18 vorgelagert, wobei sich die Frischluft-Umluft-Umschaltvorrichtung 1' zumindest bereichsweise mit der Gehäusestruktur 2' bzw. mit den Klappe1 für die Stellungen 11' und 12' in das Innere des Wasserabscheidebehälters 18 erstreckt.

Auch hier ergibt sich durch die Anordnung der Klappe 1 für die Stellungen 11', 12' eine nahezu gleiche Ansaug- und Einströmrichtung der Frischluft FL in die Frischluft-Einleitungsöffnung 14' als auch der Umluft UL in die Umluft-Einleitungsöffnung 15'.

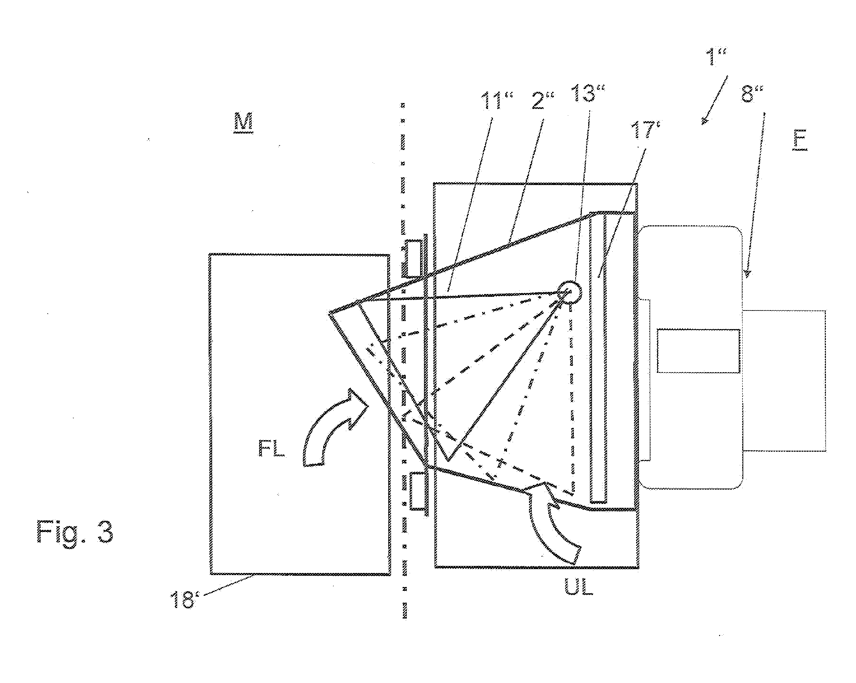

Fig. 3 zeigt eine Frischluft-Umluft-Umschaltvorrichtung 1" mit einer Klappengeometrie die lediglich eine Klappe 11" umfasst, welche schwenkbar um die Schwenkachse 13" im Inneren der Gehausestruktur 2" gelagert ist.

Im Inneren der Gehäusestruktur 2" ist das Filterelement 17' zwischen der Klappe 11" und dem Gebläse 8" angeordnet.

Ferner ist der Frischluft-Umluft-Umschaltvorrichtung 1" ein Wasserabscheidebehälter 18' vorgelagert, wobei sich die Frischluft-Umluft-Umschaltvorrichtung 1" zumindest bereichsweise mit der Gehäusestruktur 2" bzw. mit der Klappe 11" in das Innere des Wasserabscheidebehälters 18' erstreckt.

Ähnlich wie in Fig. 1 und Fig. 2 erfolgt die Zufuhr der Frischluft FL aus dem Motorraum M und die Zufuhr der Umluft UL aus dem Fahrzeuginnenraum F.

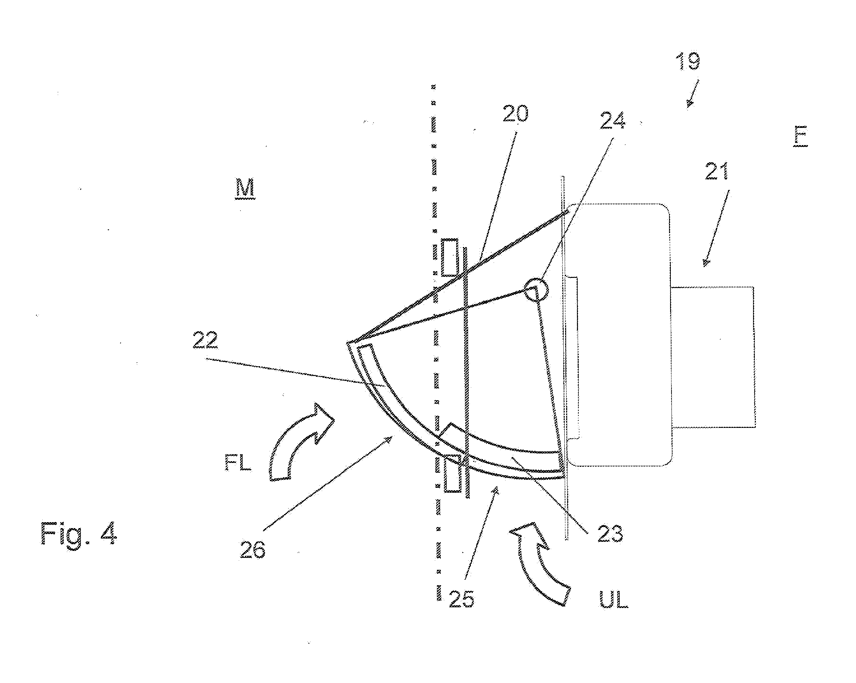

Fig. 4 zeigt eine weitere Ausführungsform einer Frischluft-Umluft-Umschaltvorrichtung 19 mit einer Gehausestruktur 20 und einem nachgelagerten Gebläse 21. Im Inneren der Gehäusestruktur 20 sind zwei im Querschnitt bogenförmige Klappen 22 und 23, um eine gemeinsame Schwenkachse 24 schwenkbar angeordnet. Die Klappen 22 und 23 sind ineinander verschwenkbar ausgebildet Im Wesentlichen weist dazu die Klappe 23 einen Außenradius auf, der zumindest geringfügig kleiner ist als der Innenradius der Klappe 22. Die Klappe 23 ist der Umluft-Einleitungsöffnung 25 zugeordnet und die Klappe 22 der Frischluft-Einleitungsöffnung 26.

Ähnlich wie in den Fig. 1 bis Fig. 3 erfolgt die Zufuhr der Frischluft FL aus dem Motorraum M und die Zufuhr der Umluft UL aus dem Fahrzeuginnenraum F.

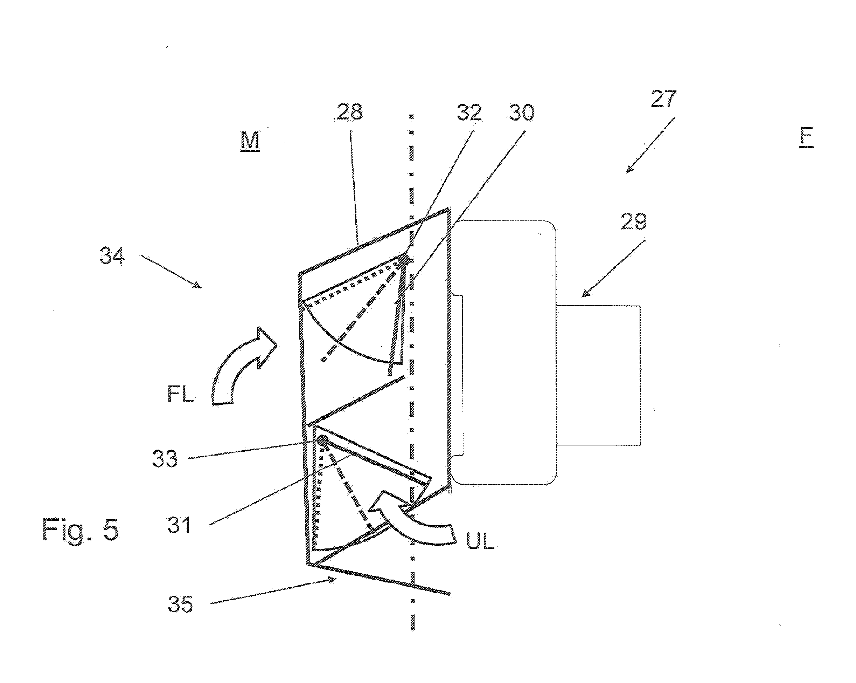

Fig. 5 zeigt eine weitere Ausführungsform einer Frischluft-Umluft-Umschaltvorrichtung 27 mit einer Gehäusestruktur 28 und einem nachgelagerten Gebläse 29. Im Inneren der Gehäusestruktur 28 sind zwei Klappen 30, 31 mit jeweils separater Schwenkachse 32, 33 übereinander angeordnet. Die obere Klappe 30 ist der Frischluft-Einleitungsöffnung 34 und die Klappe 31 der Umluft-Einleitungsöffnung 35 zugeordnet.

Bei der hier dargestellten Frischluft-Umluft-Umschaltvorrichtung 27 erfolgt sowohl die Zufuhr der Frischluft FL und die Zufuhr der Umluft UL aus dem Motorraum M und somit auf einer gemeinsamen Stirnwandseite. Beide Klappen 30, 31 sind innerhalb des Motorraums M innerhalb der Gehäusestruktur 28 angeordnet.

Zwischen den Klappen 30, 31 kann ein Trennelement 36 vorgesehen sein, welches im Wesentlichen die Frischluft-Einleitungsöffnung 34 und die Umluft-Einleitungsäffnung 35 definiert

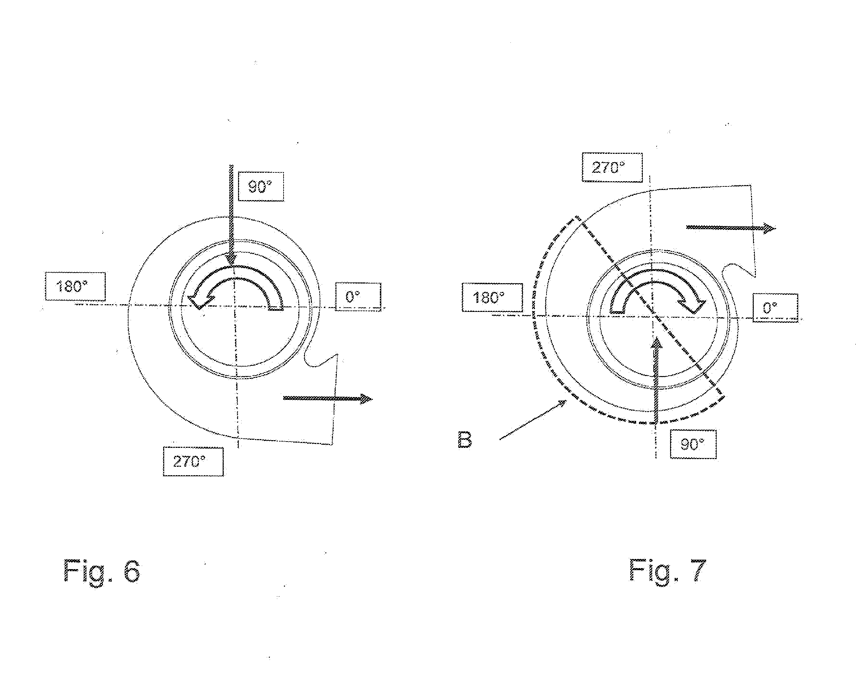

Die Fig. 6 und 7 stellen schematisch die Ansaug- und Einströmnchtungen bei einem linksdrehenden (Fig. 6) und rechtsdrehenden (Fig. 7) Gebläse dar, wobei der in Fig. 7 dargestellte Bereich B ein Ansaug-Einsträmrichtung von etwa 30° bis 240° relativ zur Ausström-Abströmrichtung des Luftstroms darstellt. Die Ansaugung erfolgt axial zur Spirale in Richtung der Einlaufzarge, die Abströmung erfolgt radial.

## Patentansprüche

1. Fahrzeug-Klimatisierungsvorrichtung mit einer fahrzeuginnenraumseitig vor Fahrzeuginnenraum (F) von Fahrzeugmotorraum (M) trennenden Stirnwand (5, 5') angeordneten Gebläse (8, 8', 8", 21, 29) zur Förderung von durch eine Frischluft-Einleitungsöffnung (14, 14', 26, 34) und durch eine Umluft-Einleitungsöffnung (15, 15', 26, 35) über eine vorgeschaltete Frischluft-Umluft-Umschaltvorrichtung (1, 1', 1", 19, 27) eintretenden Luftstrom, **dadurch gekennzeichnet, dass** sich die Umschaltvorrichtung (1, 1', 1", 19, 27) vom Fahrzeuginnenraum (F) durch eine Öffnung (4, 4') in der Stirnwand (5, 5') bis in den Motorraum (M) erstreckt.

2. Fahrzeug-Klimatisierungsvorrichtung nach Anspruch 1, **gekennzeichnet durch**, eine nahezu gleiche Ansaug- und Einströmrichtung der Frischluft (FL) in die Frischluft-Einleitungsöffnung (14, 14', 26, 34) als auch der Umluft (UL) in die Umluft-Einleitungsäffnung (15, 15', 26, 35).

3. Fahrzeug-Klimatisierungsvorrichtung nach Anspruch 1 oder 2, **gekennzeichnet durch**, eine Ansaug-Einströmrichtung von etwa 30° bis 240°, bevorzugt etwa 50° bis 180°, relativ zur Ausström-Abströmrichtung des Luftstroms.

4. Fahrzeug-Klimatisierungsvorrichtting nach einem der Ansprüche 1 bis 3, **gekennzeichnet durch**, eine Abdichtung der sich **durch** die Öffnung (4, 4') der Stirnwand (5, 5') erstreckenden Frischluft- Umluft-Umschaltvorrichtung (1, 1', 1", 19, 27) gegenüber der Stirnwand (5, 5') zwischen der Frischluft-Einleitungsöfftnung (14, 14', 26, 34) und der Umluft-Einleitungsöffnung (15, 15', 26, 35).

5. Fahrzeug-Klimatisierungsvorrichtung nach einem der Ansprüche 1 bis 4, **gekennzeichnet durch**, eine an einem Flansch (6) oder dergleichen befestigten Frischluft-Umluft-Umschaltvorrichtung und einer Dichtung (7) zwischen dem Flansch (6) und der Stirnwand (5, 5').

6. Fahrzeug-Klimatisierungsvorrichtung nach einem der Ansprüche 1 bis 5. **gekennzeichnet durch**, eine sowohl in Sperr-/Öffnungsstellung zur Frischluft-Einleitungsöffnung (14, 14', 26, 34) als auch in Sperr-/Öffnungsstellung zur Umluft-Einleitungsöffnung (15, 15', 26, 35) bringbare, insbesondere einschenklig und schwenkbar ausgebildete, Klappe (11, 11', 11", 12, 12', 22, 23, 30, 31).

7. Fahrzeug-Klimatisierungsvorrichtung nach einem der Ansprüche 1 bis 5, **gekennzeichnet durch**, je Einleitungsöffnung (14, 14', 26, 34, 15, 15', 26, 35) unabhängiger, in Sperr-Öffnungsstellung bringbarer Klappe (11, 11', 11", 12, 12', 22, 23, 30, 31).

8. Fahrzeug-Klimatisierungsvorrichtung nach einem der Ansprüche 6 oder 7, **gekennzeichnet durch**, eine mit **durch** die Öffnung (4, 4') in der Stirnwand (5, 5') schwenkbaren, bevorzugt zumindest teilweise in den Bereich des Fahrzeug-Motorraums (M) schwenkbaren, Klappe (11, 11', 11", 12, 12', 22, 23, 30, 31),

9. Fahrzeug-Klimatisierungsvorrichtung nach einem der Ansprüche 1 bis 8, **gekennzeichnet durch**, eine Erstreckung der Frischluft-Umluft-Umschaltvorrichtung (1, 1', 1", 19, 27) in einen freien Bauraum einer vor der Stirnwand (5, 5') angeordneten Wasserabscheidung (18, 18').

10. Fahrzeug-Klimatisierungsvorrichtung nach einem der Ansprüche 1 bis 9, **gekennzeichnet durch**, eine Anordnung der Frischluft-Einleitungsöffnung (14, 14', 26, 34) oberhalb der Umluft-Einleitungsöffnung (15, 15', 26, 35).
